# EUROPEAN PATENT SPECIFICATION

(11) **EP 1 228 543 B1**
(45) Date of publication and mention of the grant of the patent: **21.06.2006**
(21) Application number: 99963475.1
(22) Date of filing: 26.11.1999
(51) Int. Cl.: H01M 2/18, H01M 10/06

(54) **BATTERY SEPARATOR PROVIDED WITH A PLURALITY OF STUDS AND VERTICAL RIBS**
BATTERIESEPARATOR MIT MEHREREN ERHEBUNGEN UND VERTIKALER RIPPEN
SEPARATEUR DE BATTERIE MUNI DE PLUSIEURS TENONS ET NERVURES VERTICALES

(30) Priority: 11.08.1999 US 372531
(43) Date of publication of application: 07.08.2002
(73) Proprietor: Daramic, LLC, Charlotte, NC 28273 (US)
(72) Inventor: BÖHNSTEDT, Werner, D-24558 Henstedt-Ulzburg (DE); WHEAR, J., Kevin, Utica, KY 42376 (US)
(74) Representative: UEXKÜLL & STOLBERG
(86) International application number: PCT/EP1999/009751
(87) International publication number: WO 2001/013442

(56) References cited:
- EP-A- 0 121 169
- EP-A- 0 528 473
- PATENT ABSTRACTS OF JAPAN vol. 018, no. 263 (E-1550), 19 May 1994 (1994-05-19) & JP 06 044955 A (JAPAN STORAGE BATTERY CO LTD), 18 February 1994 (1994-02-18)

## Description

### FIELD OF THE INVENTION

This invention relates to separators for electric lead acid storage batteries.

### BACKGROUND OF THE INVENTION

Lead acid storage batteries typically comprise a plurality of positive and negative electrode plates separated from another by thin microporous sheets. These separators serve to separate, i.e. to electrically isolate the electrode plates. They are usually provided with a plurality of ribs to prevent a direct contact of the separator sheet in particular with the positive electrode plates. While in use oxygen is generated at the positive plates during charging which oxidizes the separator material thus causing deterioration of the separator with subsequent short-circuiting between the positive and negative plates.

However, such ribs increase the electric resistance and acid displacement of the separator thereby reducing the discharge capacity of the battery. Also, ribs require the use of additional material and therefore increase the production costs of the separator. Moreover, ribs may contribute to problems such as misalignments during pocketing of the electrode plates which, in turn, can result in puncture of the separator sheet by sharp edges of the electrodes thus causing a significant reduction in the useful life of the battery.

In order to reduce the electrical resistance, acid displacement and raw material costs US 5,558,952 suggests separators having a plurality of broken discontinuous ribs in the center of the separator sheet. It was found that profiles with interrupted vertical ribs tend to generate problems in the production of separator pockets in that a so-called "cushion effect" is observed. In addition, broken ribs with short elevated parts cannot prevent a direct contact of the edges of the electrode plates with the separator sheet.

Furthermore, dimpled separator profiles have been suggested to reduce electrical resistance and acid displacement. In these profiles the separator is provided with a pattern of dimples evenly distributed over the separator sheet. These profiles have never gained commercial interest.

### SUMMARY OF THE INVENTION

The present invention relates to a battery separator for a lead acid storage battery comprising a porous sheet provided with a plurality of studs and at least one elongated vertical rib on at least one side of the sheet. The at least one elongated vertical rib is arranged in the center area of the sheet and, if the separator comprises studs on one side only, is present on the same side as the studs, i.e. the separator comprises at least one elongated vertical rib in the center area of at least one side of the sheet provided with a plurality of studs. The scope of the invention is defined in independent claims 1 and 12.

It is the object of the invention to provide a battery separator for a lead acid storage battery which has a reduced electrical resistance, a reduced acid displacement, and a reduced raw material requirement without showing the disadvantages of known separators.

It is a further object of the invention to provide a separator that reliably maintains electrode distance during use, ensures a high cycle life of the battery and avoids assembly problems during the pocketing of the electrodes and battery production.

### BRIEF DESCRIPTIONS OF THE DRAWING

Figure 1 is a isometric view of a separator according to the present invention.
Figure 2 is a partially broken away isometric view of a folded sheet of a separator according to the present invention containing an electrode plate.
Figure 3 is a view in the direction III-III of Figure 1.

### DETAILED DESCRIPTION OF THE INVENTION

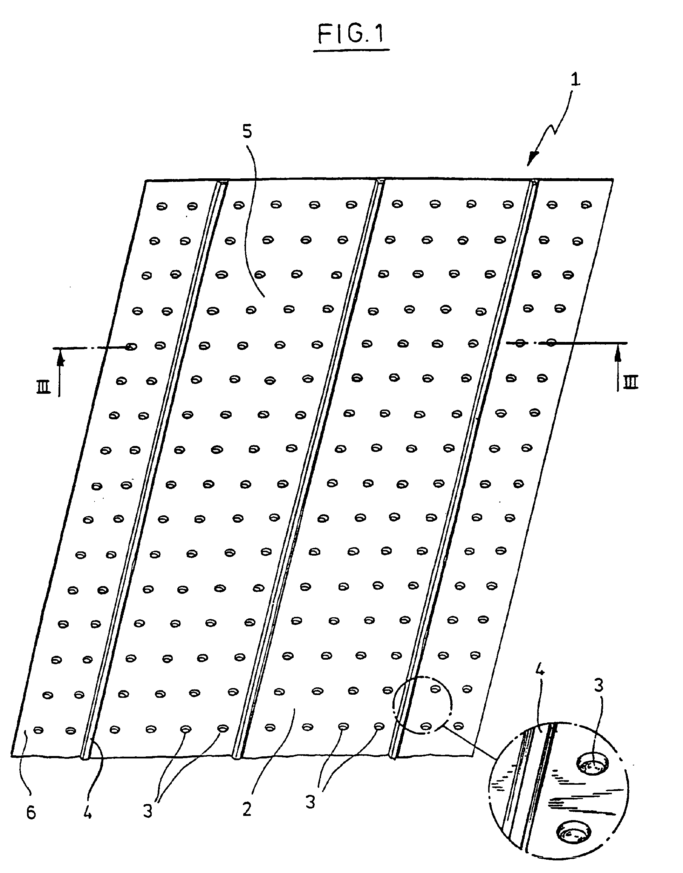

In the following, embodiments of the present invention will be described in detail with reference to the accompanying drawings. Figure 1 shows a separator 1 of the present invention. The separator comprises a porous sheet 2 provided with a plurality of studs 3 having the form of truncated cones and three continuous vertical ribs 4 in the center area 5 of the separator sheet. The studs are also present at the lateral side areas 6.

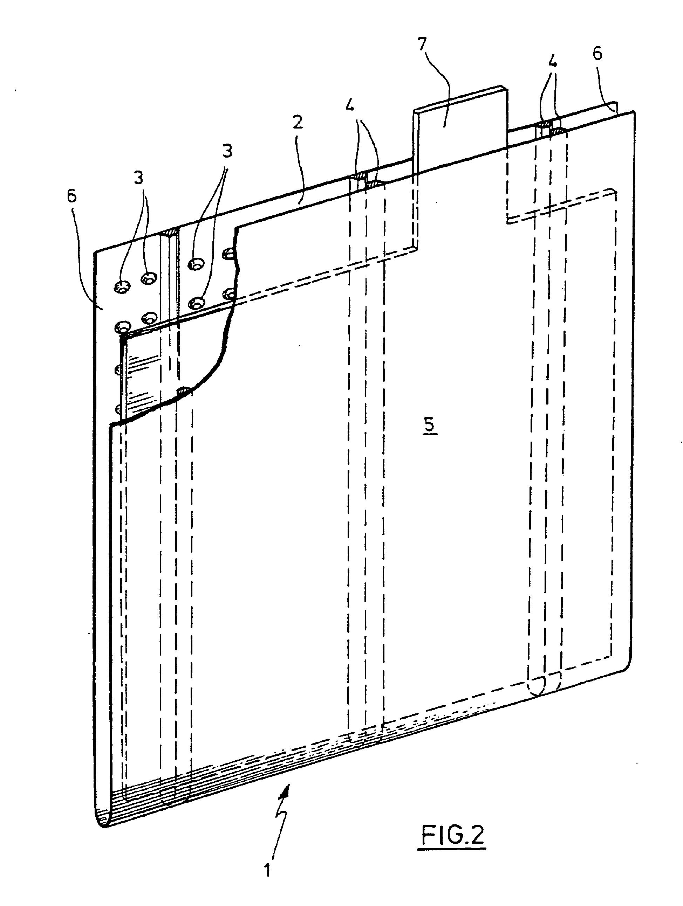

Figure 2 depicts an electrode plate 7 after it has been inserted in the microporous separator 1 but before sealing the side end portions 6.

The sheet 2 is preferably made of a synthetic resin such as polyolefin, poly(vinyl chloride) or other suitable material which is compatible with the battery environment where it is to be used. The preferred separator material is polyolefin, such as polypropylene, ethylene-butene copolymer, and preferably polyethylene, more preferably high molecular weight polyethylene, i.e. polyethylene having a molecular weight of at least 300,000, even more preferably ultra high molecular weight polyethylene, i.e. polyethylene having a molecular weight of at least 1,000,000, in particular more than 4,000,000, and most preferably 5,000,000 to 8,000,000 (measured by viscosimetry and calculated by Margolie's equation), a standard load meld index of substantially 0 (measured as specified in ASTM D 1238 (Condition E) using a standard load of 2,160 g) and a reduced viscosity of not less than 1,000 ml/g, preferably not less than 2,000 ml/g (determined in a solution of 0.02 g of polyolefin in 100 g of decalin at 130 °C).

The finished separator preferably comprises a homogeneous mixture of 8 to 100 vol.% of polyolefin, 0 to 40 vol.% of a plasticizer and 0 to 92 vol.% of inert filler material. The preferred filler is dry, finely divided silica. The preferred plasticizer is petroleum oil. Since the plasticizer is the component which is easiest to remove from the polymer-filler-plasticizer composition, it is useful in imparting porosity to the battery separator. The final composition of the separator will depend upon the original composition and the component or components extracted. Materials of this kind are well-known in the art and described for example in US 3,351,495 the disclosure of which is incorporated herein by reference.

The microporous separator sheet has a pore size which is generally less than 1 µm in diameter, and preferably more than 50% of the pores are 0.5 µm or less in diameter. It is especially preferred that at least 90% of the pores have a diameter of less than 0.5 µm.

The thickness of the separator sheet is preferably within the range of 0.1 to 0.6 mm, preferably within the range of 0.15 to 0.25 µm and most preferably about 0.2 mm.

The microporous separator sheet is provided on one side of the sheet with a plurality of studs and at least one vertical rib in the center area of the sheet. However, the separator can additionally comprise ribs and/or studs on the other side of the sheet. Preferably the separator comprises a plurality of studs and at least one vertical rib on only one side of the sheet. According to a preferred embodiment the separator contains 2 to 4 vertical ribs, more preferably 2 or 3 vertical ribs.

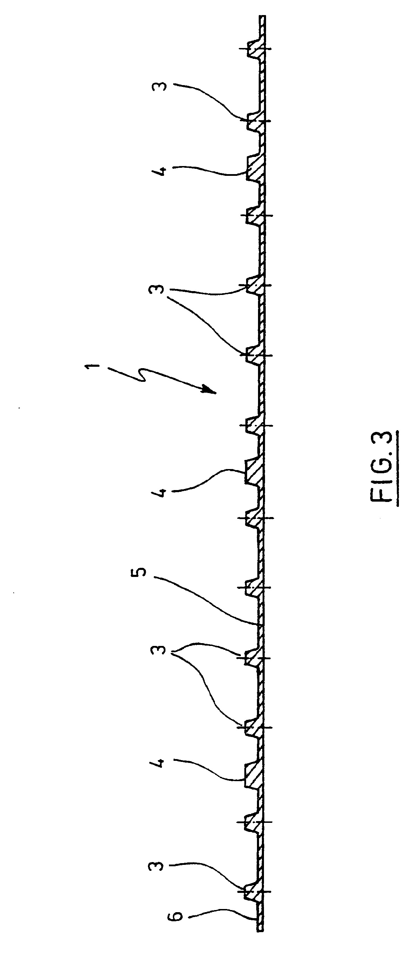

The ribs preferably have a height of about 0.3 to 1.3 mm, preferably about 0.4 to 0.9 mm and most preferably of about 0.5 mm, and a base width of about 0.5 to 1.5 mm, preferably about 0.7 mm. They may have any suitable cross section with round and triangular cross sections being preferred and trapezoid cross section being most preferred. The height of the ribs may be the same as that of the studs, as illustrated in Figure 3, or may be lower.

The at least one vertical ribs is an elongated rib, i.e. a rib having a length of at least 2 cm. According to a preferred embodiment, the vertical rib(s) have the form of continuous ribs extending across the whole separator sheet as shown in Figure 1.

Separators for starter batteries typically have a width of about 160 mm, electrodes of about 145 to about 148 mm. Prior art separators usually have ribs spaced at a distance of from about 6 to 13 mm. Therefore, a typical separator comprises about 12 to 25 ribs which greatly contribute to the total volume of the separator and thus to the electrical resistance and the acid displacement. Moreover, the rib material constitutes a considerable portion of the total separator material. The separators of the present invention contain one and preferably not more than 4 vertical ribs and since the contribution of the studs to the total volume of the separator is minimal a significant decrease of separator volume, electrical resistance, and acid displacement is achieved. By the separator profile of the present invention the total volume of ribs and studs can be reduced to about 10 % to 30 % of the rib volume of a ribbed separator according to the prior art. Thus, the amount of material needed for the production of the separator and the costs are reduced significantly.

The term "studs" refers to elevated areas rising above the separator sheet 2 and having the form of embossed or preferably solid bodies. They have the function of a spacer keeping the separator sheet 2 away from the positive electrode plate 7 and thus prevent a direct contact of the sheet with the electrode.

The studs may have any suitable shape, and preferably have the form of spherical caps, such as semi-spheres and/or truncated pyramides, with truncated cones being most preferred. They preferably have a height of about 0.3 to about 1.3 mm, more preferably about 0.4 to 0.9 mm, and most preferably about 0.5 mm, and a base diameter of about 0.5 to about 1.5 mm, preferable about 0.7 mm.

According to another embodiment the studs have the form of a plurality of non-continuous, broken ribs similar to those disclosed for an instance in US 5,558,952. The elevated parts of such non-continuous ribs preferably have a length of not more than 1 cm, more preferably of not more than 0.5 cm. The gaps between the elevated parts of the non-continuous ribs preferably have a length of at least about double the length of the elevated parts.

The number of studs is dependant upon the separator material. Typically the separator sheet is provided with about 0.2 to 2 studs per cm² of the sheet surface, preferably about 1 stud per cm². The maximum distance between two studs is preferably in the range of about 4 to 25 mm. The studs may be arranged aligned, as shown in Figure 1, or alternately or randomly distributed.

The studs and the at least one vertical rib are solid bodies which are preferably integrally formed of the same material as the separator sheet as will be explained later.

The at least one elongated vertical rib is arranged in the center area 5 of the separator sheet, i.e. the part of the sheet being in contact with the electrode plates. The term "center" refers to the horizontally determined middle of the sheet. The studs must also be present in the center area 5 but are preferably also present at the side areas or shoulders 6 of the separator (land areas).

The separators can also comprise a plurality of closely spaced ribs in the lateral side areas 6 of the separator sheet. In this instance, the lateral edges of the separator preferably comprise at least about 10 to 12 ribs per cm as disclosed for instance in EP 0 899 801 A1. Also, the separators may comprise a plurality of short, intersectant, vertically spaced ribs at the lateral side areas of the separator sheet as disclosed for instance in US 5,716,734, or a combination of both closely spaced vertical ribs and intersectant ribs as disclosed in US 5,558,952. If present, such intersectant ribs preferably start at one of the studs and extend to the left or right edge of the separator sheet. It is also preferred that the height of such intersectant ribs decreases from the inside of the sheet to the outside. At the inner end the ribs may have for instance the same height as the studs, at the outer end the height can be close to zero. The short intersectant ribs may be arranged horizontally or slanted relative to the horizontal line. According to still another embodiment the thickness of the side areas of the sheet may be greater than the thickness of the center area of the sheet e.g. by a factor of 2 as described in European patent specification EP 0 484 295 B1. The above reinforcements of the land areas 6 help to prevent puncture of the separator sheet by edges of the electrode plates. Separators with reinforced side areas 6 preferably do not comprise studs at the side areas 6.

To increase rigidity in transverse direction the separators of the present invention may also be provided with a plurality of continuous transverse ribs as disclosed in US 5,776,630. Transverse ribs preferably have a lower height than the at least one vertical rib.

The separators of the present invention preferably have the form of a pocket with an open top, a closed bottom and closed sides. Such pockets are manufactured basically by molding synthetic resin, alone, or a mixture of synthetic resin with inorganic powder and a pore-forming agent, into a belt-like sheet by means of a molding machine, such as an extruder. The extruded separator material is passed between at least one pair of calender rolls, which form the studs and/or the rib patterns on the length of material. The pore-forming agent is then extracted from the molded sheet by means of a solvent. The sheet is thereafter dried, so that a porous belt-like sheet is obtained. The porous sheet is cut into a number of pieces of a predetermined length and in a rectangular shape. The sheet separator is then folded at the middle, forming two mutually facing sides with side end portions 6 formed on the left and right margins of the folded sheet separator. A negative or preferably positive electrode plate 7 for lead acid storage battery is then inserted into the folded separator sheet as illustrated in Figure 2 and then the side edges of the separator are sealed together by heat sealing, such as ultrasonic, or mechanical sealing, such as pressure welding, or the like. The sealed portions are formed on opposite side edges of the resulting pocket type separator with the bottom edge formed by the above mentioned folding and the left and right side edges closed, and with an open top side. The formation of pocket separators is well-known in the art.

The above process results in solid ribs and studs formed integrally from the same material as the separator sheet as illustrated in Figure 3. This is a preferred embodiment of the invention. However, it is also possible to form the separator sheet, the studs and/or the ribs in separate steps using the same or different materials. Suitable rib materials include polyethylene, polypropylene, and poly(vinyl chloride). These materials may be unfilled or filled, e.g. with silica or air. The use of air as a filler results in so called "blown ribs". For instance, a separator provided with a plurality of integrally formed studs is formed in a first step and an elongated vertical rib is applied thereto later, e.g. by extrusion. It is evident that in this embodiment the elongated rib can also be applied to the electrode plate instead of the separator sheet. The electrode is then pocketed with the separator comprising the plurality of ribs.

If the at least one vertical rib does not have the form of a continuous rib it is important to arrange the rib not only in the center area of the sheet but also in the bottom edge area of the separator pocket (vertical middle of the unfolded sheet). This can be achieved, for instance, by extruding an elongated rip onto the separator after cutting the separator or by forming a continuous rib by extrusion, cutting this continuous rib into pieces having a length of not less than 2 cm, and then folding these pieces to provide pieces having a U-form. The U-formed pieces are applied to the bottom edge of the electrode plate which is thereafter pocketed with a separator provided with a plurality of studs.

Although not preferred, such two (or more) piece separators are clearly within the scope of the present invention.

Finally, a plurality of positive electrodes, contained in their respective separators, together with a plurality of negative electrode plates, are assembled into a cell assembly of the lead acid storage battery.

Separator production and manufacturing of pockets are usually performed at different locations. Therefore, it is preferred that the belt-like separator is cut into the width needed for pocket production and then rolled up. These rolls are sold and delivered to the battery manufacturer who cuts the rolled material into pieces for pocket production.

The plurality of studs and the at least one vertical rib of the separators of the present invention are preferably arranged on the side of the separator sheet facing the positive electrode. Thus, in pockets for retaining a positive electrode plate the studs and vertical ribs are provided on the inner surfaces on the pocket. However, additional ribs and studs may be provided on the other surfaces as described above.

The separators of the present invention can be prepared at considerably lower costs than ribbed separators according to the prior art due to a reduced raw material need and higher production speed. They do not show the disadvantages of separators provided with broken ribs, i.e. no cushion effect is observed upon pocket production and a direct contact between the separator sheet 2 and the electrode edges is reliably prevented. Furthermore, they safely keep the distance between the electrodes and avoid problems during battery assembly thus ensuring a high-cycle life. In addition, it has been found that the separators of the present invention give a higher cold crank power compared to known separators. Separators wherein two or more features meet the preferred definitions as specified above are particularly preferred.

## Claims

1. A battery separator for a storage battery, said separator comprising a porous sheet having a center area and side areas and being provided with a plurality of studs on at least one side of the sheet and 1 to 4 elongated vertical ribs in the center area of the at least one side of the sheet provided with a plurality of studs, wherein the vertical ribs are solid ribs and that the separator has the form of a pocket with an open top, a closed bottom and closed sides.

2. The separator as defined in claim 1 wherein the elongated ribs are continuous ribs.

3. The separator as defined in claim 1 comprising 2 to 4 elongated vertical ribs in the center area of the separator sheet.

4. The separator as defined in claim 1 wherein the studs have the form of truncated cones, truncated pyramids and/or spherical caps.

5. The separator as defined in claim 1 wherein the elongated vertical ribs have the same or a lower height than the studs.

6. The separator as defined in claim 1 comprising 0.2 to 2 studs per cm² of the separator sheet.

7. The separator as defined in claim 1 wherein the studs and the ribs are solid bodies integrally formed of the same material as the separator sheet.

8. The separator as defined in claim 1 wherein the studs and/or the ribs are formed of a different material than the separator sheet.

9. The separator of claim 1 containing an electrode plate.

10. The separator of claim 1 in which the studs and vertical ribs are provided on the inner surfaces of the pocket.

11. The separator as defined in claim 1 wherein the elongated ribs are arranged in the bottom edge area of the separator pocket.

12. A battery separator for a storage battery, said separator comprising a porous sheet having a center area and side areas and being provided with a plurality of studs on at least one side of the sheet and at least one elongated vertical rib in the center area of the at least one side of the sheet provided with a plurality of studs, **characterized in that** the at least one vertical rib is a solid rib and that the separator is provided in form of a roll.

13. A lead acid storage battery comprising at least one separator according to claim 1.

## Patentansprüche

1. Batterieseparator für eine Speicherbatterie, wobei der Separator eine poröse Folie mit einem Mittelbereich und Seitenbereichen aufweist und mit einer Vielzahl von Noppen auf mindestens einer Seite der Folie und 1 bis 4 länglichen, vertikalen Rippen in dem Mittelbereich mindestens der Seite der Folie ausgestattet ist, die mit einer Vielzahl von Noppen ausgestattet ist, wobei die vertikalen Rippen massive Rippen sind und der Separator die Form einer Tasche hat, die oben offen, unten geschlossen und an den Seiten geschlossen ist.

2. Separator nach Anspruch 1, bei dem die länglichen Rippen kontinuierliche Rippen sind.

3. Separator nach Anspruch 1, der 2 bis 4 längliche vertikale Rippen in dem Mittelbereich der Separatorfolie aufweist.

4. Separator nach Anspruch 1, bei dem die Noppen die Form abgestumpfter Kegel, abgestumpfter Pyramiden und/oder kugelförmiger Kappen haben.

5. Separator nach Anspruch 1, bei dem die länglichen vertikalen Rippen die gleiche oder eine niedrigere Höhe als die Noppen haben.

6. Separator nach Anspruch 1, der 0,2 bis 2 Noppen pro cm² der Separatorfolie aufweist.

7. Separator nach Anspruch 1, bei dem die Noppen und die Rippen massive Körper sind, die integral aus demselben Material wie die Separatorfolie gebildet sind.

8. Separator nach Anspruch 1, bei dem die Noppen und/oder die Rippen aus einem anderen Material als die Separatorfolie gebildet sind.

9. Separator nach Anspruch 1, der eine Elektrodenplatte enthält.

10. Separator nach Anspruch 1, bei dem die Noppen und vertikalen Rippen auf den Innenseiten der Tasche angeordnet sind.

11. Separator nach Anspruch 1, bei dem die länglichen Rippen in dem unteren Kantenbereich der Separatortasche angeordnet sind.

12. Batterieseparator für eine Speicherbatterie, der eine poröse Folie mit einem Mittelbereich und Seitenbereichen aufweist und mit einer Vielzahl von Noppen auf mindestens einer Seite der Folie und mindestens einer länglichen vertikalen Rippe in dem Mittelbereich mindestens der Seite der Folie ausgestattet ist, die mit einer Vielzahl von Noppen ausgestattet ist, **dadurch gekennzeichnet, dass** mindestens eine vertikale Rippe eine massive Rippe ist und der Separator in Form einer Rolle bereitgestellt wird.

13. Blei-Säure-Speicherbatterie, die mindestens einen Separator nach Anspruch 1 aufweist.

## Revendications

1. Séparateur de batterie pour une batterie de stockage, ledit séparateur comprenant une feuille poreuse comportant une zone centrale et des zones latérales et étant muni de plusieurs tenons sur au moins une face de la feuille et de 1 à 4 nervures verticales allongées dans la zone centrale de la, au moins une, face de la feuille munie de plusieurs tenons,
dans lequel les nervures verticales sont des nervures massives et le séparateur a la forme d'une poche avec un haut ouvert, un fond fermé et des faces fermées.

2. Séparateur selon la revendication 1, dans lequel les nervures allongées sont des nervures continues.

3. Séparateur selon la revendication 1, comprenant de 2 à 4 nervures verticales allongées dans la zone centrale de la feuille de séparation.

4. Séparateur selon la revendication 1, dans lequel les tenons ont la forme de cônes tronqués, de pyramides tronquées et/ou de capuchons sphériques.

5. Séparateur selon la revendication 1, dans lequel les nervures verticales allongées ont une hauteur égale ou inférieure à celle des tenons.

6. Séparateur selon la revendication 1, comprenant de 0,2 à 2 tenons par cm² de la feuille de séparation.

7. Séparateur selon la revendication 1, dans lequel les tenons et les nervures sont des corps massifs constitués intégralement du même matériau que la feuille de séparation.

8. Séparateur selon la revendication 1, dans lequel les tenons et/ou les nervures sont constitués d'un matériau différent de celui de la feuille de séparation.

9. Séparateur selon la revendication 1, contenant une plaque formant une électrode.

10. Séparateur selon la revendication 1, dans lequel les tenons et les nervures verticales sont prévus sur les surfaces intérieures de la poche.

11. Séparateur selon la revendication 1, dans lequel les nervures allongées sont disposées dans la zone du bord du fond de la poche du séparateur.

12. Séparateur de batterie pour une batterie de stockage, ledit séparateur comprenant une feuille poreuse comportant une zone centrale et des zones latérales et étant muni de plusieurs tenons sur au moins une face de la feuille et d'au moins une nervure verticale allongée dans la zone centrale de la, au moins une, face de la feuille munie de plusieurs tenons,
**caractérisé en ce que** la, au moins une, nervure verticale est une nervure massive et **en ce que** le séparateur est prévu en forme de rouleau.

13. Batterie de stockage au plomb comprenant au moins un séparateur selon la revendication 1.
